# EUROPÄISCHE PATENTSCHRIFT

(11) **EP 0 979 851 B1**
(45) Veröffentlichungstag und Bekanntmachung des Hinweises auf die Patenterteilung: **12.01.2005**
(21) Anmeldenummer: 99114807.3
(22) Anmeldetag: 29.07.1999
(51) Int. Cl.: C09D 183/07

(54) **Strahlenhärtbare Beschichtungsmassen**
Radiation cured coating compositions
Compositions de revêtement durcissables par radiation

(30) Priorität: 11.08.1998 DE 19836246
(43) Veröffentlichungstag der Anmeldung: 16.02.2000
(73) Patentinhaber: Goldschmidt AG, 45127 Essen (DE)
(72) Erfinder: Döhler, Hardi, 45525 Hattingen (DE); Ebbrecht, Thomas, Dr., 58455 Witten (DE); Hamann, Winfried , Dr., 45356 Essen (DE); Lersch, Peter, Dr., 46119 Oberhausen (DE); Stadtmüller, Stefan, Dr., 45141 Essen (DE)

(56) Entgegenhaltungen:
- WO-A-95/23694
- US-A- 5 510 190

## Beschreibung

Gegenstand der vorliegenden Erfindung sind strahlenhärtbare Beschichtungsmassen mit verbesserten Eigenschaften, wie Haftung zum Substrat und über die Zeit stabile Trenneigenschaften.

Polysiloxane, die Acrylatsäureestergruppen (Acrylatgruppen) enthalten, haben sich als unter energiereicher Strahlung härtbare Bindemittel, z. B. für Druckfarben und zur Herstellung von Lackbindemitteln oder für Beschichtungsmittel für Kunststoff-, Papier-, Holz- und Metalloberflächen, bewährt. Die Härtung erfolgt insbesondere durch UV-Strahlung (nach Zusatz bekannter Photoinitiatoren, wie z. B. Benzophenon und seine Derivate) oder durch Elektronenstrahlung.

Acrylatmodifizierte Organosiloxane sind in zahlreichen Patentschriften beschrieben. Stellvertretend werden zum Stand der Technik die folgenden Patent- und Offenlegungsschriften genannt.

Organopolysiloxane, bei denen die acrylathaltigen organischen Gruppen über eine Si-O-C-Bindung mit dem Polysiloxangerüst verbunden sind, können nach einem Verfahren der DE-C-27 47 233 durch Umsetzung von -COH-Gruppen aufweisenden (Meth)acrylsäureestern mit Organopolysiloxanen, die SiX-Gruppen (X = Alkoxy-, Hydroxy- oder Chlorrest) aufweisen, dadurch hergestellt werden, daß man als Organopolysiloxane solche der Formel 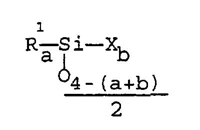
- R¹: = Alkylgruppe mit 1 bis 4 C-Atomen und/oder eine Phenylgruppe;
- X: = Chlor oder eine OR²-Gruppe;
- R²: = Alkylgruppe mit 1 bis 4 C-Atomen und/oder Wasserstoff;
- a: = 1,0 bis 2,0;
- b =: 0,02 bis 1,6;
- a+b: ≤ 2,66;
wobei das Siloxanmolekül 3 bis 100 Si-Atome aufweist, und als (Meth)acrylsäureester Pentaerythrittri(meth)acrylat verwendet, wobei, bezogen auf COH- und SiX-Gruppen, 0,05 Mol bis äquimolare Mengen des Pentaerythritesters eingesetzt werden.

In einer Modifizierung dieses Verfahrens verfährt man entsprechend der DE-C-29 48 708 in der Weise, daß man Organopolysiloxane der Formel 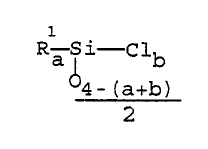 (R¹ = Alkyl mit 1 bis 4 Kohlenstoffatomen, Vinyl und/oder Phenyl, mit der Maßgabe, daß mindestens 90 Mol-% der Gruppen R¹ Methyl sind; a = Wert von 1,8 bis 2,2; b = Wert von 0,004 bis 0,5) zunächst mit, bezogen auf SiCl-Gruppen, mindestens 2molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentaerythrittrimethacrylat reagieren läßt und dann das Verfahrensprodukt von in diesem suspendierten festen Bestandteilen in an sich bekannter Weise abtrennt.

Organopolysiloxane, bei denen die acrylesterhaltigen organischen Gruppen über Si-C-Bindungen mit dem Polysiloxangerüst verbunden sind, können z. B. dadurch hergestellt werden, daß man an ein Wasserstoffsiloxan Allylglycidether oder ein anderes geeignetes Epoxid mit einer olefinischen Doppelbindung addiert und nach der Anlagerung das Epoxid mit Acrylsäure unter Öffnung des Epoxidringes verestert. Diese Verfahrensweise ist in der DE-C-38 20 294 beschrieben.

Eine weitere Möglichkeit der Herstellung acrylatmodifizierter Polysiloxane mit Si-C-Verknüpfung der modifizierenden Gruppe(n) besteht darin, daß man an ein Wasserstoffsiloxan einen Alkohol mit einer olefinischen Doppelbindung, z. B. Allylalkohol, in Gegenwart eines Platinkatalysators, addiert und dann die OH-Gruppe dieses Alkohols mit Acrylsäure oder einem Gemisch von Acrylsäure und anderen gegebenenfalls gesättigten Säuren umsetzt. Diese Verfahrensweise ist z. B. in der DE-C-38 10 140 beschrieben.

Betrachtet man unverzweigte Organopolysiloxane, so kann eine Modifizierung an den beiden endständigen Siloxydimethyleinheiten oder an einer bzw. mehreren Siloxymethyleinheiten in der Siloxankette erfolgen. Man spricht demgemäß von endständig bzw. seitenständig modifizierten Polysiloxanen. Die Modifizierung kann auch sowohl endständig als auch seitenständig sein, im weiteren werden diese zu den seitenständig modifizierten gezählt.

In der Praxis hat es sich gezeigt, daß mit endständig (meth)acrylatmodifizierten Organopolysiloxanen hergestellte abhäsive Beschichtungen auf flächigen Trägern, z. B. für die Anwendung in Klebebändern oder Etikettenlaminaten, sich durch niedrige, zeitstabile Trennwerte auszeichnen, da solche Polysiloxane über einen hohen Siliconcharakter verfügen, der nicht durch organische Modifizierungen innerhalb der Siloxankette unterbrochen wird. Zur Erreichung einer guten Haftung zum Substrat ist allerdings eine höhere Modifizierungsdichte mit reaktiven Gruppen notwendig. Diese kann mit endständig modifizierten Siloxanen nur schwer erreicht werden, da die Siloxankette entsprechend verkürzt werden müßte. Solche kurzkettigen endständig modifizierten Polysiloxane sind vergleichsweise teuer, weshalb ihr Einsatz unwirtschaftlich wäre.

Seitenständig modifizierte Silicon(meth)acrylate können dagegen in ihrer Modifizierungsdichte über weite Bereiche hinweg unabhängig vom Molekulargewicht variiert werden. Da seitenständige (Meth)acrylatgruppen aufgrund ihrer sterischen Hinderung bekanntermaßen weniger reaktiv sind, besteht die Gefahr, daß nicht alle Gruppen bei der Polymerisation vollständig reagieren. Solche überbleibenden, unvernetzten Acrylatgruppen können dann Folgereaktionen, z. B. mit dem Haftklebstoff eines Etikettenlaminates, eingehen, was zu einem Anstieg der Trennwerte über die Zeit führen würde.

Der vorliegenden Erfindung liegt die Aufgabe zugrunde, strahlenhärtbare Beschichtungsmassen mit guter Haftung zum Substrat zu entwickeln, die über die Zeit stabile Trenneigenschaften besitzen.

Es wurde gefunden, daß strahlenhärtende Beschichtungsmassen, bestehend aus Mischungen von seitenständig und endständig (meth)acrylatmodifizierten Organopolysiloxanen der allgemeinen Formeln (I) und (II) solche geforderten Eigenschaften besitzen.

Überraschenderweise hat sich gezeigt, daß in solchen erfindungsgemäßen Mischungen die Vorteile der Einzelkomponenten zu Tage treten, während die oben beschriebenen Nachteile durch die jeweils andere Komponente kompensiert werden und nicht wirksam werden. Dieses Eigenschaftsprofil ließe sich durch die folgende Hypothese erklären: Direkt nach der Beschichtung auf einem flächigen Träger kommt es noch vor der Vernetzung der reaktiven Einheiten zu einer graduellen Auftrennung der Mischung, wobei sich die stärker polare seitenständig modifizierte zum Substrat und die weniger polare endständig modifizierte Komponente zur Oberfläche orientiert. Nach Aushärtung bewirkt die seitenständig modifizierte Komponente die gute Verankerung zum Substrat, während die endständig modifizierte Komponente an der Oberfläche die günstigen Trenneigenschaften bestimmt. Dadurch ergibt sich für die erfindungsgemäßen Beschichtungsmassen folgendes verbessertes Eigenschaftsprofil:
1. Die erfindungsgemäßen Beschichtungsmassen zeigen nach Aushärtung gegenüber verschiedenen Untergründen (Substraten, wie zum Beispiel Papier, Kunststoffolie) eine deutlich verbesserte Haftung.
2. Eine Veränderung der Abhäsivität der ausgehärteten Beschichtungen bei Lagerung über längere Zeiträume, erkennbar durch den Anstieg der Trennwerte, ist nicht oder nur in geringem Umfang gegeben.
3. Zusätzlich ist die Aushärtung der Beschichtungsmassen auf Trägermaterialien mit hohen Verarbeitungsgeschwindigkeiten möglich.

Die erfindungsgemäßen strahlenhärtbaren Beschichtungsmassen enthalten
(A) 10 bis 90 Gew.-% eines oder mehrerer seitenständig modifizierter Organopolysiloxane der allgemeinen Formel (I) 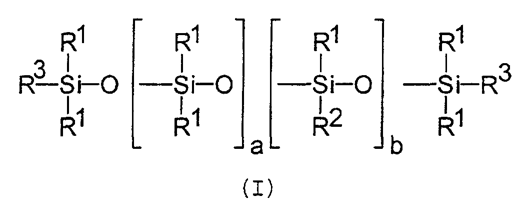
   - R¹=: gleiche oder verschiedene aliphatische oder aromatische Kohlenwasserstoffreste mit 1 bis 10 C-Atomen,
   - R²=: ein ggf. Etherbrücken enthaltender linearer, cyclischer, aromatischer oder verzweigter Kohlenwasserstoffrest mit 1 bis 20 C-Atomen, an welchen 1 bis 5 Acrylsäure- und/oder Methacrylsäure-Einheiten und gegebenenfalls Monocarbonsäure-Einheiten mit 2 bis 10 Kohlenstoffatomen, welche frei von zur Polymerisation befähigten Doppelbindungen sind, über Esterbindungen angebunden sind,
   - R³ =: R¹ oder R²,
   - a =: 0 bis 300,
   - b =: 1 bis 25,
(B) 10 bis 90 Gew.-% eines oder mehrerer endständig modifizierter Organopolysiloxane der allgemeinen Formel (II) 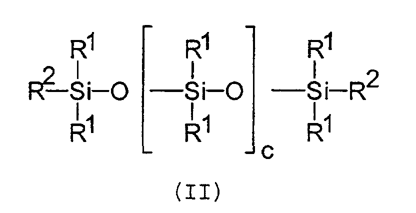 wobei R¹ und R² die oben aufgeführten Bedeutungen haben und c = 5 bis 500 ist.

Bevorzugt sind Mischungen der Komponenten (I) und (II) im Verhältnis 80 : 20 bis 20 : 80 mit a = 0 bis 200, b = 3 bis 20 und c = 5 bis 300. Besonders bevorzugt sind Mischungen der Komponenten (I) und (II) im Verhältnis 75 : 25 bis 25: 75 mit a = 0 bis 100, b = 5 bis 15 und c = 15 bis 200.

Die erfindungsgemäßen strahlenhärtenden Beschichtungsmassen können in üblicher Weise mit Härtungsinitiatoren, Füllstoffen, Pigmenten, anderen an sich bekannten Acrylatsystemen und weiteren üblichen Zusatzstoffen compoundiert werden. Die erfindungsgemäßen Massen können dreidimensional durch freie Radikale vernetzt werden und härten thermisch unter Zusatz von z. B. Peroxiden oder unter Einfluß energiereicher Strahlung, wie UVoder Elektronenstrahlung, innerhalb kürzester Zeit zu mechanisch und chemisch widerstandsfähigen Schichten aus, die bei geeigneter Zusammensetzung der erfindungsgemäßen Beschichtungsmassen vorbestimmbare abhäsive Eigenschaften aufweisen. Wird als Strahlungsquelle UV-Licht verwendet, erfolgt die Vernetzung vorzugsweise in Anwesenheit von Photoinitiatoren und/oder Photosensibilisatoren, wie z. B. Benzophenon und dessen Derivate oder Benzoin und entsprechende substituierte Benzoinderivate.

Photoinitiatoren und/oder Photosensibilisatoren werden in den erfindungsgemäßen Beschichtungsmassen vorzugsweise in Mengen von 0,01 bis 10 Gew.-%, insbesondere von 0,1 bis 5 Gew.-%, jeweils bezogen auf das Gewicht der acrylatfunktionellen Organopolysiloxane, verwendet.

Die Einzelkomponenten der erfindungsgemäßen Beschichtungsmassen der allgemeinen Formeln (I) und (II) sind aus dem Stand der Technik bekannte Verbindungen, deren Herstellung zum Beispiel in "Chemie und Technologie der Silicone" von W. Noll, Verlag Chemie 1968 und beispielsweise den folgenden Schriften und der darin zitierten Literatur beschrieben ist: DE-C-38 20 294, DE-C-38 10 140, US-A-5 552 506, deutsche Patentanmeldung 198 08 786.1.

Nachfolgende Beispiele sollen zur Verdeutlichung der Erfindung dienen.

Endständig modifizierte Siliconacrylate:

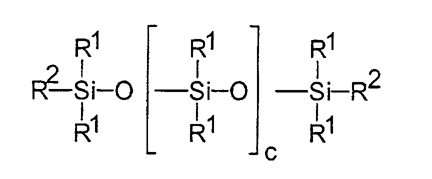

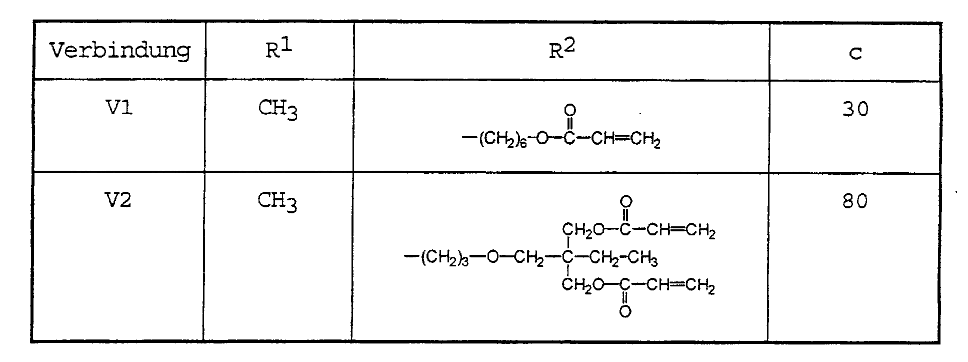

Seitenständig modifizierte Siliconacrylate:

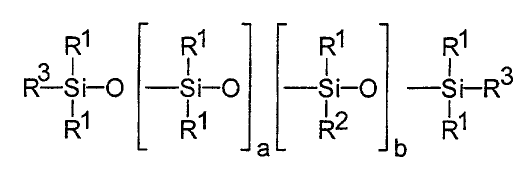

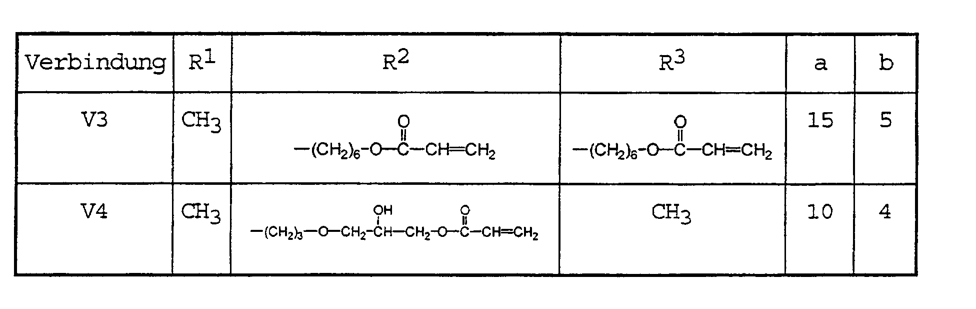

### Anwendungstechnische Überprüfung

Zur Überprüfung der anwendungstechnischen Eigenschaften der erfindungsgemäß zu verwendenden Beschichtungsmassen werden die Produkte der Beispiele sowie die der nicht erfindungsgemäßen Vergleichsbeispeile auf flächige Träger (orientierte Polypropylenfolie) aufgetragen und nach Zugabe von 2 % Photoinitiator (Darocur® 1173, Ciba Geigy) durch Einwirkung von UV-Licht mit 120 W/cm bei einer Bahngeschwindigkeit von 20 m/min unter Stickstoffatmosphäre gehärtet. Die Auftragsmenge beträgt in jedem Fall ca. 1 g/m².

### Trennwert

Für die Ermittlung der Trennwerte werden verschiedene, 25 mm breite Klebebänder der Firma Beiersdorf verwendet, und zwar ein mit Acrylatkleber beschichtetes Klebeband, das im Handel unter der Bezeichnung TESA® 7475 erhältlich ist, sowie mit Kautschukkleber beschichtete Klebebänder, welche im Handel unter den Bezeichnungen TESA® 4154 und TESA® 7476 erhältlich sind.

Zur Messung der Abhäsivität werden diese Klebebänder auf den Untergrund aufgewalzt und anschließend bei 40 °C unter einem Gewicht von 70 g/cm² gelagert. Nach 24 Stunden wird die Kraft gemessen, die benötigt wird, um das jeweilige Klebeband mit einer Geschwindigkeit von 30 cm/min unter einem Schälwinkel von 180° vom Untergrund abzuziehen. Diese Kraft wird als Trennkraft oder Trennwert bezeichnet. Die allgemeine Testprozedur entspricht im wesentlichen der FINAT Testmethode Nr. 10. Zur Überprüfung des Alterungsverhaltens wird die Lagerzeit auf 7 und 14 Tage unter den oben beschriebenen Bedingungen verlängert.

### Loop-Test

Der Loop-Test dient zur schnellen Ermittlung des Härtungsgrades einer Trennbeschichtung. Hierzu wird ein etwa 20 cm langer Streifen des Klebebandes TESA® 4154 der Firma Beiersdorf dreimal auf den Untergrund aufgewalzt und sofort wieder von Hand abgezogen. Dann wird durch Zusammenlegen der Enden des Klebebandes eine Schlaufe gebildet, so daß die Klebeflächen beider Enden auf etwa einem Zentimeter Strecke Kontakt haben. Dann werden die Enden wieder von Hand auseinandergezogen, wobei die Kontaktfläche gleichmäßig zur Mitte des Klebebandes wandern sollte. Im Falle einer Kontamination mit schlecht ausgehärtetem Trennmaterial ist die Klebkraft des Klebebandes nicht mehr ausreichend, um die Kontaktfläche beim Auseinanderziehen der Enden zusammenzuhalten. In diesem Falle gilt der Test als nicht bestanden.

### Restklebkraft

Die Bestimmung der Restklebkraft erfolgt weitestgehend gemäß der FINAT Testvorschrift Nr. 11. Hierzu wird das Klebeband TESA® 7475 der Firma Beiersdorf auf den Untergrund gewalzt und anschließend bei 40 °C unter einem Gewicht von 70 g/cm² gelagert. Nach 24 Stunden wird das Klebeband vom Trennsubstrat getrennt und auf einen definierten Untergrund (Stahlplatte, Glasplatte, Folie) aufgewalzt. Nach einer Minute wird die Kraft gemessen, die benötigt wird, um das Klebeband mit einer Geschwindigkeit von 30 cm/min unter einem Schälwinkel von 180° vom Untergrund abzuziehen. Der so gemessene Wert wird durch den Wert geteilt, den ein unbehandeltes Klebeband unter ansonsten gleichen Testbedingungen ergibt. Das Ergebnis wird als Restklebkraft bezeichnet und in der Regel in Prozent angegeben.

### "Rub-off"-Test

Die Bestimmung der Adhäsion der gehärteten Beschichtungsmassen auf dem Substrat erfolgt durch kräftiges Reiben mit dem Daumen. Bei mangelnder Haftung bilden sich gummiartige Krümel. Dieser Test wird allgemein als "Rub-off"-Test bezeichnet.

**Tabelle 1:**

| Abmischungen von Beschichtungsmassen, bestehend aus Komponenten (I) und (II) | | | | |
|---|---|---|---|---|
| Erfindungsgemäße Beispiele (Gewichtsprozentanteile): | | | | |
| Beispiel | V1 | V2 | V3 | V4 |
| A | 70 | | 30 | |
| B | 60 | | | 40 |
| C | | 40 | 60 | |
| D | | 50 | | 50 |

**Tabelle 2:**

| Nicht abgemischte Beschichtungsmassen (nichterfindungsgemäße Beispiele) | | | | |
|---|---|---|---|---|
| Beispiel | V1 | V2 | V3 | V4 |
| E | 100 | | | |
| F | | 100 | | |
| G | | | 100 | |
| H | | | | 100 |

**Tabelle 3:**

| Anwendungstechnische Ergebnisse | | | | |
|---|---|---|---|---|
| Beispiel | Rub-Off Test | Restklebkraft % | Trennwert TESA® 7475 N/2,5 cm | Trennwert TESA® 4154 N/2,5 cm |
| A | i.O. ^{*)} | 95 | 0,2 | 0,2 |
| B | i.O. | 96 | 0,2 | 0,2 |
| C | i.O. | 93 | 0,1 | 0,1 |
| D | i.O. | 93 | 0,1 | 0,1 |
| E | nicht i.O. | 95 | 0,2 | 0,2 |
| F | nicht i.O. | 93 | 0,1 | 0,1 |
| G | i.O. | 97 | 3,1 | 3,2 |
| H | i.O. | 98 | 2,8 | 2,5 |

| | | | | |
|---|---|---|---|---|
| ^{*)} i.O. = in Ordnung | | | | |

**Tabelle 4:**

| Trennwertalterung mit TESA® 7475 in cN/2,5 cm nach | | | |
|---|---|---|---|
| Beispiel | 1 Tag | 7 Tagen | 14 Tagen |
| A | 0,2 | 0,2 | 0,3 |
| B | 0,2 | 0,2 | 0,2 |
| C | 0,1 | 0,1 | 0,1 |
| D | 0,1 | 0,1 | 0,1 |
| E | 0,2 | 0,2 | 0,2 |
| F | 0,1 | 0,1 | 0,1 |
| G | 3,1 | 5,9 | 8,7 |
| H | 2,8 | 5,5 | 8,4 |

Die Ergebnisse der anwendungstechnischen Ausprüfungen der erfindungsgemäßen Beispiele (Tabelle 1) im Vergleich zu den nichterfindungsgemäßen Beispielen (Tabelle 2) sind in der Tabelle 3 (Rub-Off-Test, Restklebkraft; Trennwerte) und Tabelle 4 (Alterungsverhalten) dargestellt.

Aus Tabelle 3 ist ersichtlich, daß Beschichtungsmassen, bestehend aus Abmischungen von linearen Siloxanacrylaten (Komponenten der Struktur (II), V1 und V2) und seitenständigen Siloxanacrylaten (Komponenten der Struktur (I), V3 und V4), sich durch niedrige Trennwerte und hohe Restklebkräfte auszeichnen und dabei gleichzeitig hohe Adhäsion zum Substrat aufweisen. Auch bei den Beispielen E und F findet man niedrige Trennwerte und hohe Restklebkräfte, allerdings wird hier der Rub-Off-Test nicht bestanden. Die Beispiele G und H zeigen eine gute Haftung zum Substrat bei einem anfänglich schon erhöhten Trennwert, der zudem schon nach kurzer Zeit ansteigt und auf eine schnellere Alterung deutet (Tabelle 4).

In Tabelle 4 ist für die Mischungen A bis D dagegen kein Anstieg der Trennwerte zu erkennen, was einem sehr guten Alterungsverhalten entspricht.

## Patentansprüche

1. Strahlenhärtende Beschichtungsmassen, enthaltend
(A) 10 bis 90 Gew.-% eines oder mehrerer seitenständig modifizierter Organopolysiloxane der allgemeinen Formel (I) 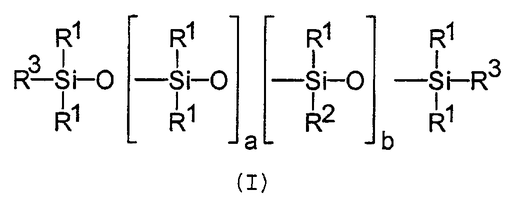
R¹ = gleiche oder verschiedene aliphatische oder aromatische Kohlenwasserstoffreste mit 1 bis 10 C-Atomen,
R² = ein ggf. Etherbrücken enthaltender linearer, cyclischer, aromatischer oder verzweigter Kohlenwasserstoffrest mit 1 bis 20 C-Atomen, an welchen 1 bis 5 Acrylsäure- und/oder Methacrylsäure-Einheiten und gegebenenfalls Monocarbonsäure-Einheiten mit 2 bis 10 Kohlenstoffatomen, welche frei von zur Polymerisation befähigten Doppelbindungen sind, über Esterbindungen angebunden sind,
R³ = R¹ oder R²,
a = 0 bis 300,
b = 1 bis 25,
(B) 10 bis 90 Gew.-% eines oder mehrerer endständig modifizierter Organopolysiloxane der allgemeinen Formel (II) 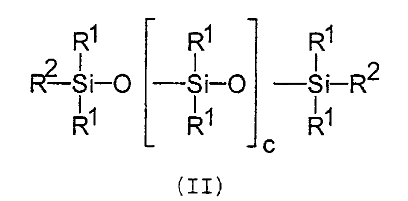 wobei R¹ und R² die oben aufgeführten Bedeutungen haben und
c = 5 bis 500 ist.

2. Strahlenhärtende Beschichtungsmassen gemäß Anspruch 1, **dadurch gekennzeichnet, daß** R¹ gleich Methyl ist.

3. Strahlenhärtende Beschichtungsmassen gemäß Anspruch 1, **dadurch gekennzeichnet, daß** a einen Wert 0 bis 200 hat.

4. Strahlenhärtende Beschichtungsmassen gemäß Anspruch 1, **dadurch gekennzeichnet, daß** b einen Wert 3 bis 20 hat.

5. Strahlenhärtende Beschichtungsmassen gemäß Anspruch 1, **dadurch gekennzeichnet, daß** c einen Wert 5 bis 300 hat.

6. Strahlenhärtende Beschichtungsmassen gemäß einem oder mehreren der vorhergehenden Ansprüche, **dadurch gekennzeichnet, daß** die Komponenten gemäß Struktur (I) und (II) im Verhältnis 80 Gew.-% zu 20 Gew.-% bis 20 Gew.-% zu 80 Gew.-% vorliegen.

7. Strahlenhärtende Beschichtungsmassen gemäß einem oder mehreren der vorhergehenden Ansprüche, **dadurch gekennzeichnet, daß** die Komponenten (I) und (II) im Verhältnis 75 Gew.-% zu 25 Gew.-% bis 25 Gew.-% zu 75 Gew.-% mit a = 0 bis 100, b = 5 bis 15 und c = 15 bis 200 vorliegen.

8. Strahlenhärtende Beschichtungsmassen gemäß einem oder mehreren der vorhergehenden Ansprüche, **dadurch gekennzeichnet, daß** R² gleich 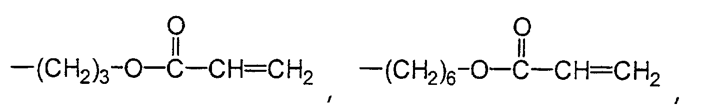 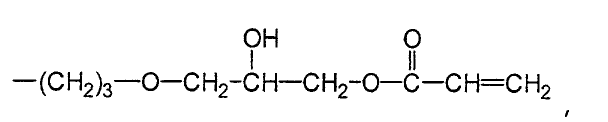 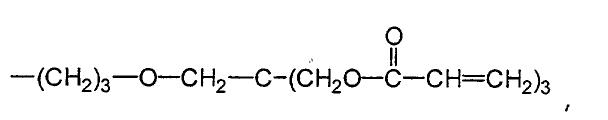 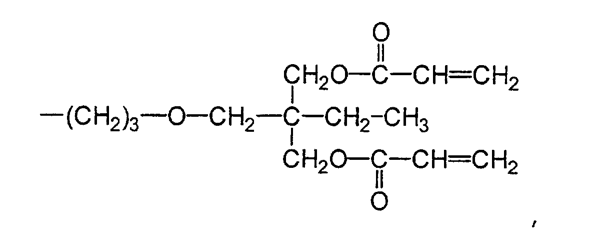 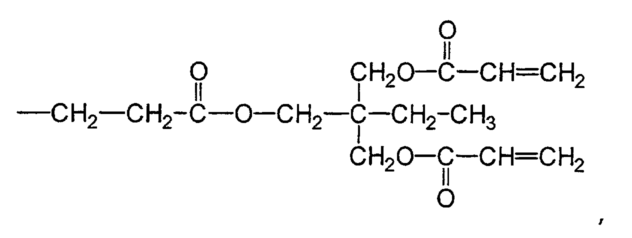 und/oder 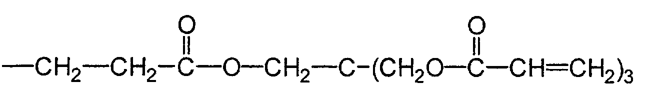 ist.

9. Verwendung der strahlenhärtenden Beschichtungsmassen gemäß einem oder mehreren der vorhergehenden Ansprüche als abhäsive Trennbeschichtungen allein oder in Mischung mit weiteren Härtungsinitiatoren, Füllstoffen, Pigmenten, anderen Organopolysiloxan(meth)acrylaten und/oder anderen an sich bekannten Acrylatsystemen und/oder weiteren üblichen Zusatzstoffen.

## Claims

1. Radiation-curing coating composition comprising
(A) from 10 to 90% by weight of one or more laterally modified organopolysiloxanes of the general formula (I) 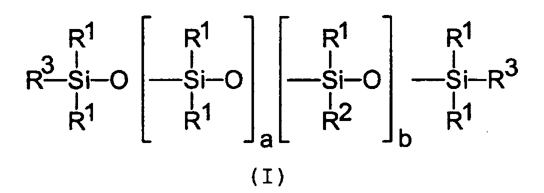
R¹ = identical or different aliphatic or aromatic hydrocarbon radicals of 1 to 10 carbon atoms,
R² = a linear, cyclic, aromatic or branched hydrocarbon radical of 1 to 20 carbon atoms, with or without ether bridges, to which there are attached, by way of ester linkages, from 1 to 5 acrylic and/or methacrylic acid units and, if desired, monocarboxylic acid units of 2 to 10 carbon atoms which are free of polymerizable double bonds,
R³ = R¹ or R²,
a = 0 to 300,
b = 1 to 25,
(B) from 10 to 90% by weight of one or more terminally modified organopolysiloxanes of the general formula (II) 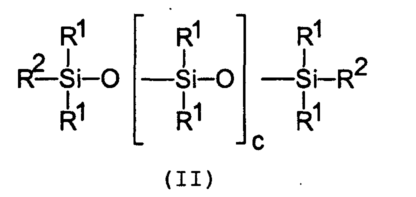 in which R¹ and R² are as defined above and
c = 5 to 500.

2. Radiation-curing coating composition according to Claim 1, **characterized in that** R¹ is methyl.

3. Radiation-curing coating composition according to Claim 1, **characterized in that** a is from 0 to 200.

4. Radiation-curing coating composition according to Claim 1, **characterized in that** b is from 3 to 20.

5. Radiation-curing coating composition according to Claim 1, **characterized in that** c is from 5 to 300.

6. Radiation-curing coating composition according to one or more of the preceding claims, **characterized in that** the components of structures (I) and (II) are present in a ratio of from 80% by weight: 20% by weight to 20% by weight:80% by weight.

7. Radiation-curing coating composition according to one or more of the preceding claims, **characterized in that** the components (I) and (II) are present in a ratio of from 75% by weight: 25% by weight to 25% by weight:75% by weight with a = 0 to 100, b = 5 to 15 and c = 15 to 200.

8. Radiation-curing coating composition according to one or more of the preceding claims, **characterized in that** R² is 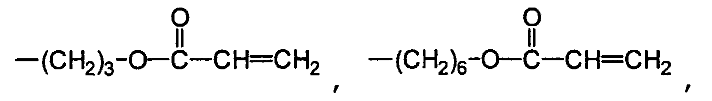 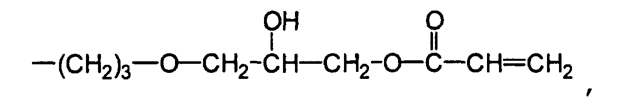 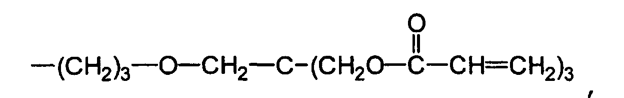 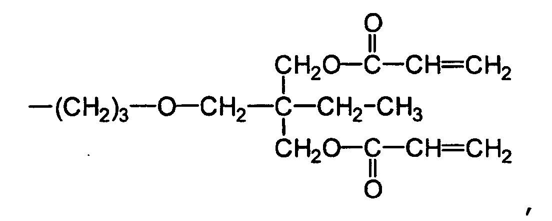 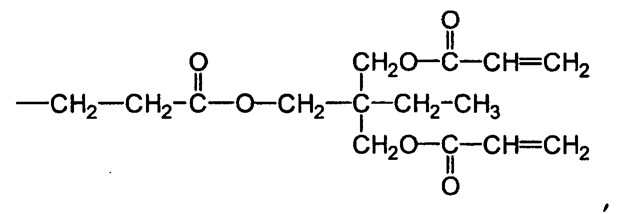 and/or

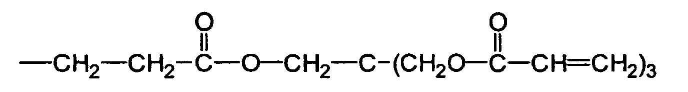

9. Use of a radiation-curing coating composition according to one or more of the preceding claims as an abhesive release coating alone or in a mixture with further curing initiators, fillers, pigments, other organopolysiloxane (meth)acrylates and/or other acrylate systems known per se and/or further customary additives.

## Revendications

1. Masses de revêtement durcissant sous l'effet de rayons, contenant
(A) 10 à 90% en poids d'un ou de plusieurs organopolysiloxanes modifiés en position latérale de formule générale (I) 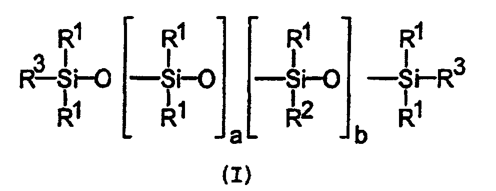
R¹ = des radicaux hydrocarbonés identiques ou différents, aliphatiques ou aromatiques comprenant 1 à 10 atomes de carbone,
R² = un radical hydrocarboné linéaire, cyclique, aromatique ou ramifié, contenant le cas échéant des ponts éther, comprenant 1 à 20 atomes de carbone, sur lequel sont liées, via des liaisons ester, 1 à 5 unités acide acrylique et/ou acide méthacrylique et le cas échéant unités acide monocarboxylique comprenant 2 à 10 atomes de carbone, qui sont exemptes de doubles liaisons aptes à une polymérisation,
R³ = R¹ ou R²,
a = 0 à 300,
b = 1 à 25,
(B) 10 à 90% en poids d'un ou de plusieurs organopolysiloxanes modifiés en position terminale de formule générale (II) 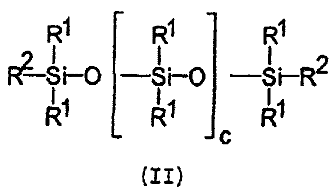
R¹ et R² ayant les significations indiquées ci-dessus et
c = 5 à 500.

2. Masses de revêtement durcissant sous l'effet de rayons selon la revendication 1, **caractérisées en ce que** R¹ représente méthyle.

3. Masses de revêtement durcissant sous l'effet de rayons selon la revendication 1, **caractérisées en ce que** a vaut 0 à 200.

4. Masses de revêtement durcissant sous l'effet de rayons selon la revendication 1, **caractérisées en ce que** b vaut 3 à 20.

5. Masses de revêtement durcissant sous l'effet de rayons selon la revendication 1, **caractérisées en ce que** c vaut 5 à 300.

6. Masses de revêtement durcissant sous l'effet de rayons selon l'une ou plusieurs des revendications précédentes, **caractérisées en ce que** les composants selon la structure (I) et (II) se trouvent dans un rapport de 80% en poids : 20% en poids à 20% en poids : 80% en poids.

7. Masses de revêtement durcissant sous l'effet de rayons selon l'une ou plusieurs des revendications précédentes, **caractérisées en ce que** les composants (I) et (II) se trouvent dans un rapport 75% en poids : 25% en poids à 25% en poids : 75% en poids avec a = 0 à 100, b = 5 à 15 et c = 15 à 200.

8. Masses de revêtement durcissant sous l'effet de rayons selon l'une ou plusieurs des revendications précédentes, **caractérisées en ce que** R² représente 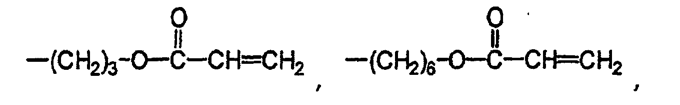 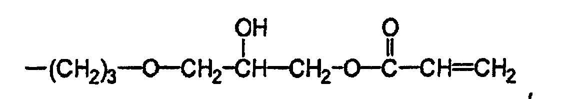 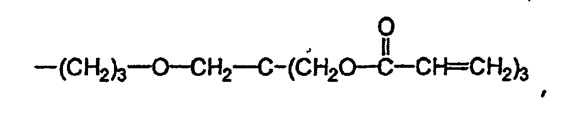 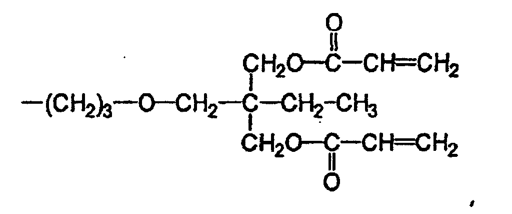 et/ou

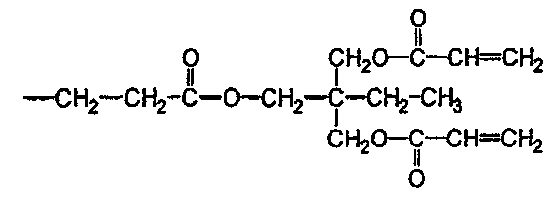

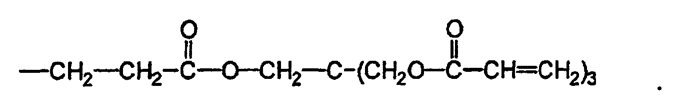

9. Utilisation des masses de revêtement durcissant sous l'effet de rayons selon l'une ou plusieurs des revendications précédentes, comme revêtements de séparation anti-adhésifs, seules ou en mélange avec d'autres initiateurs de durcissement, des charges, des pigments, d'autres (méth)acrylates d'organopolysiloxane et/ou d'autres systèmes d'acrylate connus en soi et/ou d'autres additifs usuels.
